# EUROPÄISCHE PATENTSCHRIFT

(11) **EP 1 156 309 B1**
(45) Veröffentlichungstag und Bekanntmachung des Hinweises auf die Patenterteilung: **16.04.2003**
(21) Anmeldenummer: 00110624.4
(22) Anmeldetag: 18.05.2000
(51) Int. Cl.: G01G 19/414

(54) **Automatische Probenpräparation**
Automatic preparation of a sample
Préparation automatique d'un échantillon

(43) Veröffentlichungstag der Anmeldung: 21.11.2001
(73) Patentinhaber: Precisa Instruments AG, 8953 Dietikon (CH); Mikrowellen-Systeme MWS GmbH, 7240 Küblis (CH)
(72) Erfinder: Bühler, René, Precisa Instruments AG, 8953 Dietikon (CH); Huber, Rudolf, Precisa Instruments AG, 8953 Dietikon (CH); Lautenschläger, Werner, 88299 Leutkirch (DE)
(74) Vertreter: Rupp, Christian, Dipl.Phys.

(56) Entgegenhaltungen:
- DE-A- 19 702 621
- Prospekt der Firma Mettler ME-724133 1988 Mettler Instrumente AG, CH-8606 Greifensee XP002140662
- Prospekt der Firma Mettler ME-724210 1989 Mettler Instrumente AG, CH-8606 Greifensee XP002140663
- Prospekt der Firma Mettler ME-724171 1989 Mettler Instrumente AG, CH-8606 Greifensee XP002148799

## Beschreibung

Die vorliegende Erfindung bezieht sich auf ein Verfahren zur automatisierten Erfassung von Daten für die Präparation von Laborproben, auf ein Software-Produkt zur Implementierung eines solchen Verfahrens sowie auf ein System zur automatisierten Erfassung von Daten für die Präparation von Laborproben.

Das technische Umfeld der vorliegenden Erfindung ist allgemein die Präparation von Proben, d.h. die Vorbereitung von Materialien, die in einem Labor beispielsweise zu Analysezwecken untersucht werden sollen. Die Probenpräparation umfaßt regelmäßig mehrere Schritte wie z.B. Auflösen in Lösungsmitteln, Separieren und/oder Sieben, Eindampfen und Konzentrieren, Veraschen, Trocknen und mikrowellengestützten Aufschluß. Es hat sich dabei herausgestellt, daß bei Betrachtung sämtlicher in einem Labor vorliegender Tätigkeiten die Probenpräparation den weitaus größten zeitlichen Anteil hat. Dementsprechend sollte jegliche Weiterentwicklung im Sinne eines effizienteren Labordaten-Managements an diesem gewichtigen zeitlichen Anteil ansetzen. Generelles Ziel der vorliegenden Erfindung ist es daher, die Probenpräparation in Labors zu verbessern.

Unumgänglicher Bestandteil jeglicher Probenpräparation ist das Wiegen der Proben vor und/oder nach jedem Präparationsschritt. Im Bereich der Waagentechnik ist es bereits bekannt, elektronische Waagen mit einer Schnittstelle zu versehen, um Wägedaten in eine separate Datenbank zu überführen. Weiterhin ist es aus dem Stand der Technik bekannt, von einer separaten Datenbank her Kalibrierungsdaten zu der Waage hin zu übermitteln. Diese Ansätze sind indessen isolierte Lösungen, die für eine Integration der Abläufe der Probenpräparation unzureichend sind.

Ausgehend davon ist es Aufgabe der vorliegenden Erfindung, die Probenpräparation und genauer gesagt die integrierte Erfassung und Verarbeitung der bei der Probenpräparation in Labors anfallenden Daten weiter zu automatisieren.

Eine Erkenntnis ist es dabei, daß eine Waage die zentrale Rolle bei der Probenpräparation spielt. Dementsprechend schlägt es die vorliegende Erfindung vor, Wägedaten als Basis für die automatisierte Erfassung von Daten für die Präparation von Laborproben zu verwenden. Dabei beläßt es die Erfindung nicht bei einer einfachen Abspeicherung der Wägedaten in Datenbanken, wie es bisher bekannt ist, vielmehr erfolgt eine Weiterverarbeitung bzw. eine spezifische Abspeicherung der Wägedaten, die eine Weiterverarbeitung ermöglicht. Die Waage selbst wird somit zu einem zentralen System im Labor.

Gemäß einem ersten Aspekt der vorliegenden Erfindung ist daher ein Verfahren zur automatisierten Erfassung von Daten für die Präparation von Laborproben vorgesehen, wobei die Erfassung auf der Basis von Wägedaten von einer Waage her erfolgt. Die Waage ist mit einer Recheneinheit verbunden und/oder weist selbst eine Recheneinheit auf. Gemäß der Erfindung können aus den Wägedaten automatisch praktisch sämtliche weitere bei einer Probenpräparation typischerweise anfallenden Größen (beispielsweise Feuchte, Konzentration, etc.) abgeleitet werden. Dies geschieht dadurch, daß die Wägedaten miteinander und mit den aktuellen und/oder vorhergehenden Präparationsschritten (sogenannten Methoden) verknüpft werden.

Gemäß einem weiteren Aspekt der Erfindung wird ein Ablauf, der die zur Präparation auszuführenden Präparationsmethoden als Module wiedergibt, in die Rechnereinheit eingegeben. Die Wägedaten, die sich im Zuge der Durchführung der Präparationsmethoden ergeben, werden dann automatisch abgespeichert, wobei diese Abspeicherung jeweils unter Zuordnung zu der entsprechenden Präparationsmethode und somit methodenspezifisch erfolgt. Diese spezifisch zugeordnete Abspeicherung ermöglicht ebenfalls eine Weiterverarbeitung der Wägedaten im Sinne einer Ableitung weiterer bei einer Probenpräparation typischer Größen.

Die Module können als Ikonen grafisch auf einer Anzeige wiedergegeben werden.

Das erfaßte Gewicht der Probenbehälter, in denen die Proben vorliegen, kann zur Identifizierung der Proben verwendet werden.

Der Ablauf kann modular in einer Baumstruktur vorliegen.

Alternativ oder zusätzlich zu real gemessenen Wägedaten können geschätzte Wägedaten eingegeben werden, die jeweils unter Zuordnung zu der entsprechenden Präparationsmethode gespeichert werden. Dabei können geschätzte und reale Wägedaten grafisch (beispielsweise durch unterschiedliche Schriftarten) unterschiedlich angezeigt werden.

Die Waage selbst kann eine Anzeigefunktion aufweisen, die den aktuellen Zustand des Ablaufs der Probenpräparation anzeigt.

Die Wägedaten können automatisch im Sinne einer Qualitätskontrolle ausgewertet werden.

Zur Ableitung volumetrischer Größen aus den Wägedaten können die Dichten der verwendeten Proben- und Präparationsmaterialien eingegeben werden.

Gemäß einem noch weiteren Aspekt der vorliegenden Erfindung ist ein Software-Produkt vorgesehen, das ein Verfahren wie oben ausgeführt implementiert, wenn es in den Speicher einer Recheneinheit geladen ist.

Gemäß einem noch weiteren Aspekt der vorliegenden Erfindung ist ein System zur automatisierten Erfassung von Daten für die Präparation von Laborproben vorgesehen, wobei das System wenigstens eine Waage aufweist, die mit einer Recheneinheit verbunden ist und/oder selbst eine Recheneinheit aufweist. Die Wägedaten werden dabei zu der Recheneinheit übertragen. Die Recheneinheit leitet dann unter Berücksichtigung der aktuellen und/oder vorhergehenden Präparationsmethoden (Präparationsschritte) aus den Wägedaten weitere bei einer Probenpräparation typische Größen wie z.B. Dichte, Konzentration, etc. ab.

In die Recheneinheit kann ein Ablauf gemäß einem weiteren Aspekt der Erfindung implementiert sein, der die zur Präparation auszuführenden Präparationsmethoden als Module wiedergibt. Die Recheneinheit speichert automatisch die Wägedaten, die sich im Zuge der Durchführung der Präparationsmethoden ergeben, jeweils zugeordnet zu den entsprechenden Präparationsmethoden. Die Recheneinheit kann somit beispielsweise wenigstens eine weitere für eine Präparation typische Größe automatisch aus den Wägedaten ableiten.

Die Module des Ablaufs können als Ikonen grafisch auf einer Anzeigeeinheit der Waage und/oder einer separaten Recheneinheit wiedergegeben werden.

Im folgenden werden Ausführungsbeispiele der vorliegenden Erfindung unter Bezugnahme auf die Figuren der beiliegenden Zeichnungen erläutert, so daß für den Fachmann weitere Vorteile, Eigenschaften und Merkmale der Erfindung deutlich werden.
Figur 1 zeigt eine schematische Ansicht eines vernetzten Systems zur automatisierten Erfassung und/oder Weiterverarbeitung von Probenpräparationsdaten,
Figur 2 zeigt eine schematische Ansicht eines Ablaufs einer Probenpräparation, wobei der Ablauf als Baum strukturiert ist, und
Figuren 3 bis 10 zeigen verschiedene beispielsweise Probenpräparationsmethoden, ihre zugehörigen Ikonen zur Wiedergabe auf einem Bildschirm sowie die methodenspezifische Abspeicherung von Wägedaten, die im Zuge der Durchführung der entsprechenden Probenpräparationsmethode auftreten.

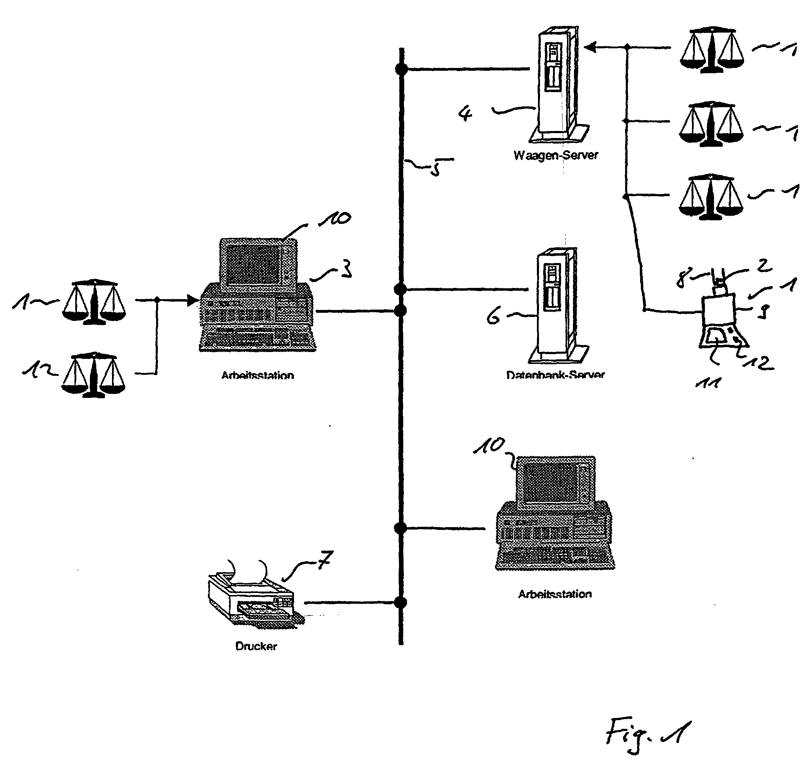

Figur 1 zeigt ein durch ein Netzwerk 5 verbundenes System zur automatisierten Erfassung und/oder Weiterverarbeitung von Daten, die bei der Präparation von Probenmaterialien 2 auftreten, die beispielsweise in Probenbehältern 8 vorliegen. Eine oder mehrere Waagen 1 sind als zentrales Element des Probenpräparationsablaufs vorgesehen. Die Waagen 1 weisen jeweils eine Schnittstelle auf, mit der sie mit einer Recheneinheit wie beispielsweise einer Arbeitsstation (PC) 3 oder einem Server 4 verbunden sind. Die Waagen können auch selbst eine Recheneinheit 9 aufweisen.

Die PCs weisen wie üblich einem Monitor 10 als Anzeigeeinheit auf, darüber hinaus sind auch zumindest einige der Waagen 1 mit einem Bildschirm 11 versehen, neben dem bzw. in dem (im Falle eines sogenannten Touchscreens) Bedientasten 12 vorgesehen sein können. Weitere für ein Netzwerk übliche Elemente wie ein Datenbank-Server 6, ein Drucker 7, etc. können angeschlossen sein.

Ein Probenpräparationsablauf läßt sich in verschiedene Schritte, sogenannte Probenpräparationsmethoden, einteilen. Je nach Bedarf werden die Probenmaterialien 2 vor, während und nach einer jeden Probenpräparationsmethode auf einer Waage 1 gewogen. Gemäß der Erfindung werden die in diesem Wägevorgang auftretenden Daten nicht etwa nur auf beispielsweise dem Datenbank-Server 6 abgelegt, vielmehr erfolgt eine methodenspezifische Abspeicherung der Wägedaten und gegebenenfalls auch eine automatische Ableitung weiterer (physikalischer) Größen, wie für die Probenpraparation typisch und zur Kennzeichnung der Proben typisch sind, aus den Wägedaten.

Der Waagen-Server 4 oder die Arbeitsstation 3 verknüpft zur Ableitung der wenigstens einen weiteren physikalischen Größe aus den Wägedaten die aktuellen Wägedaten mit:
- Wägedaten aus vorhergehenden Probenpräparationsmethoden, und
- der aktuellen und/oder vorhergehenden Probenpräparationsmethoden selbst.

Um aus den Gewichtsdaten auch volumetrische Größen ableiten zu können, sind beispielsweise in dem Datenbank-Server 6 die spezifischen Dichten der Proben- bzw. Probenpräparationsmaterialien abgelegt.

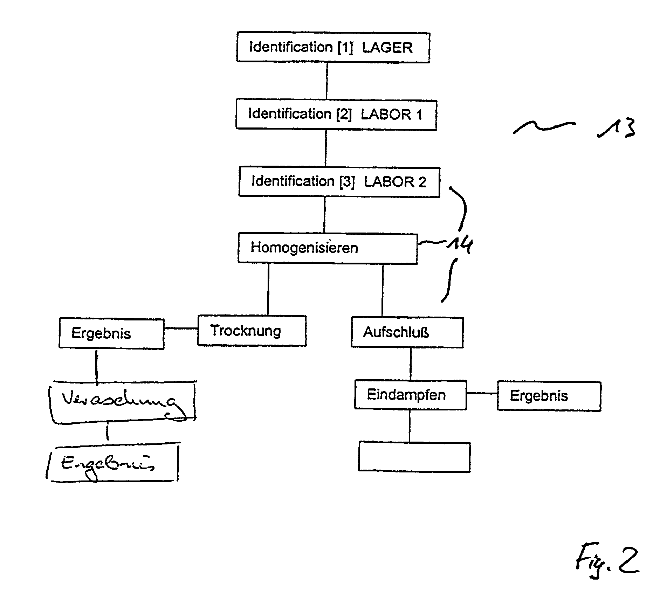

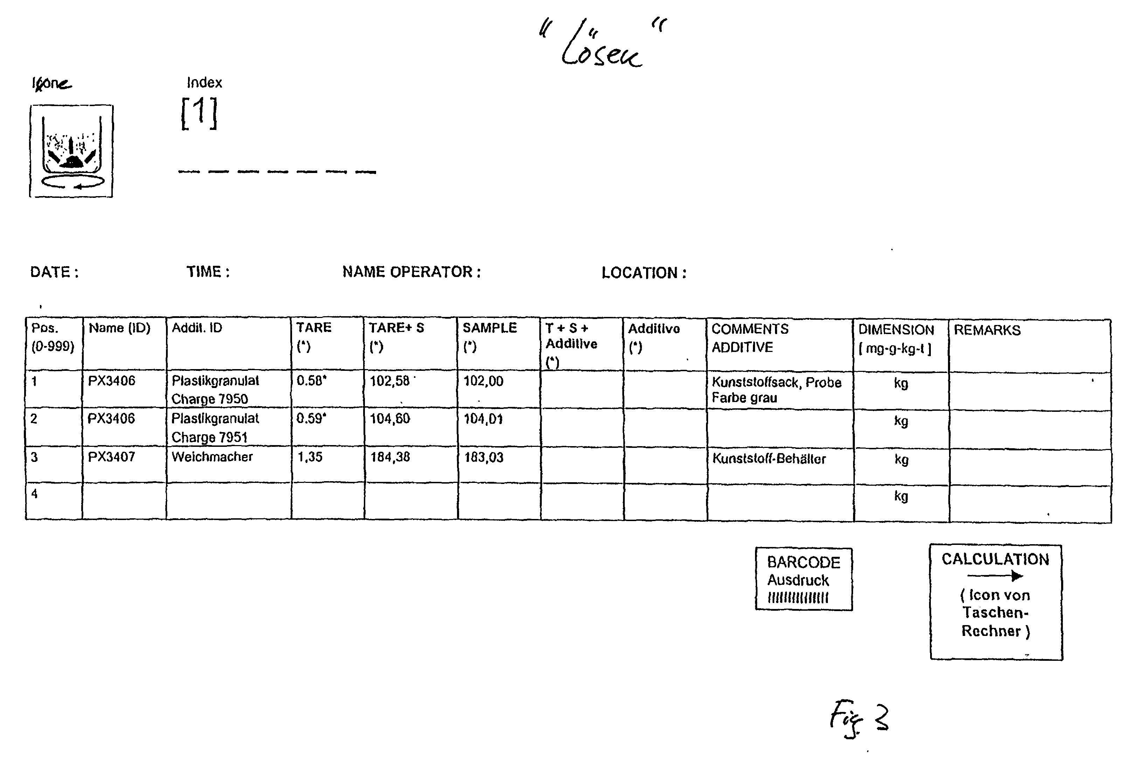

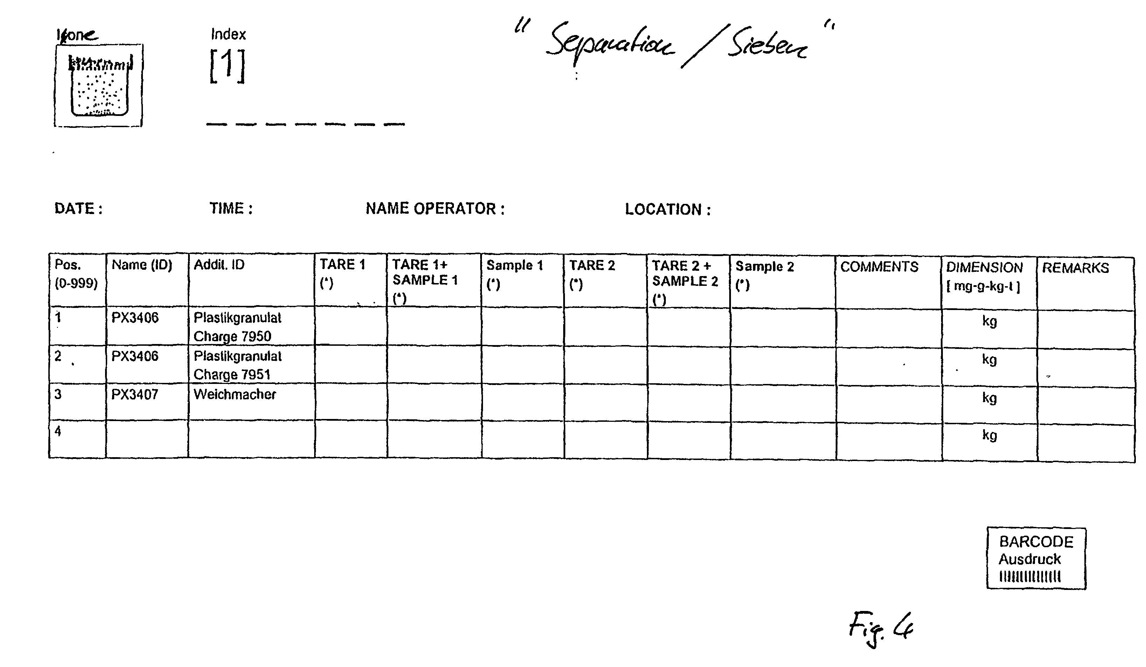

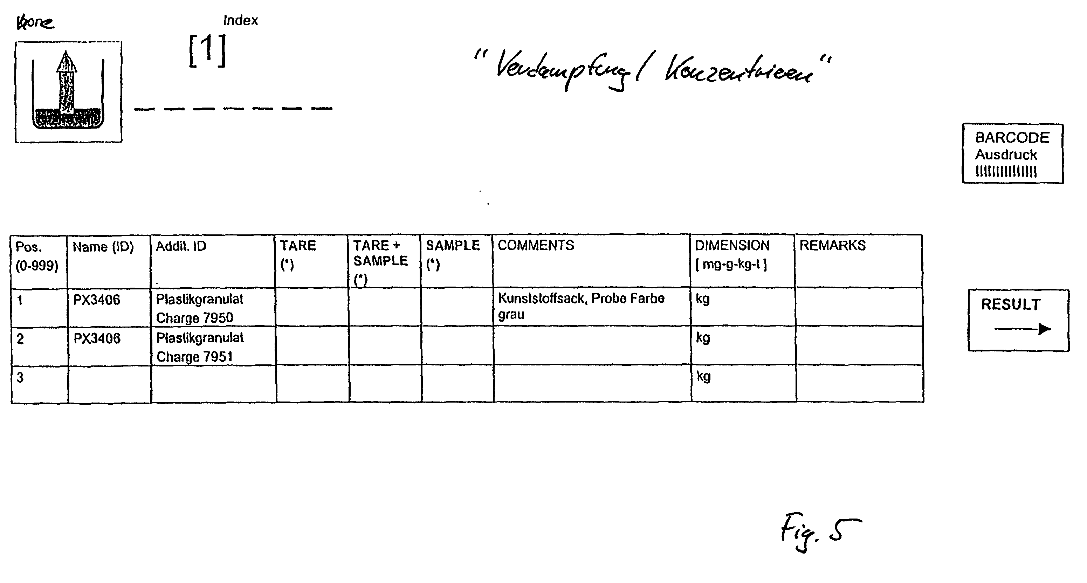

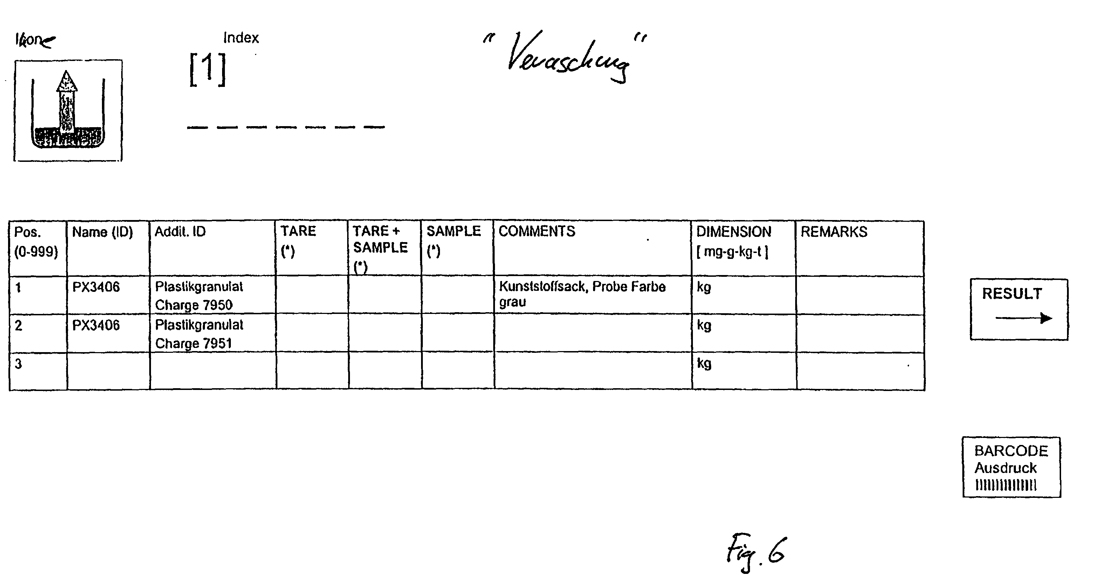

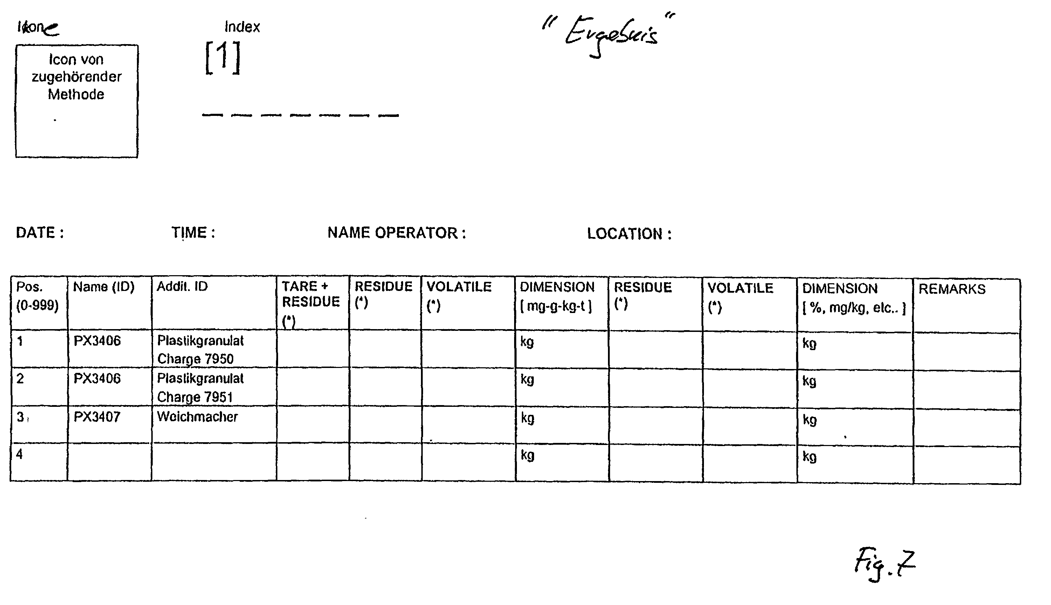

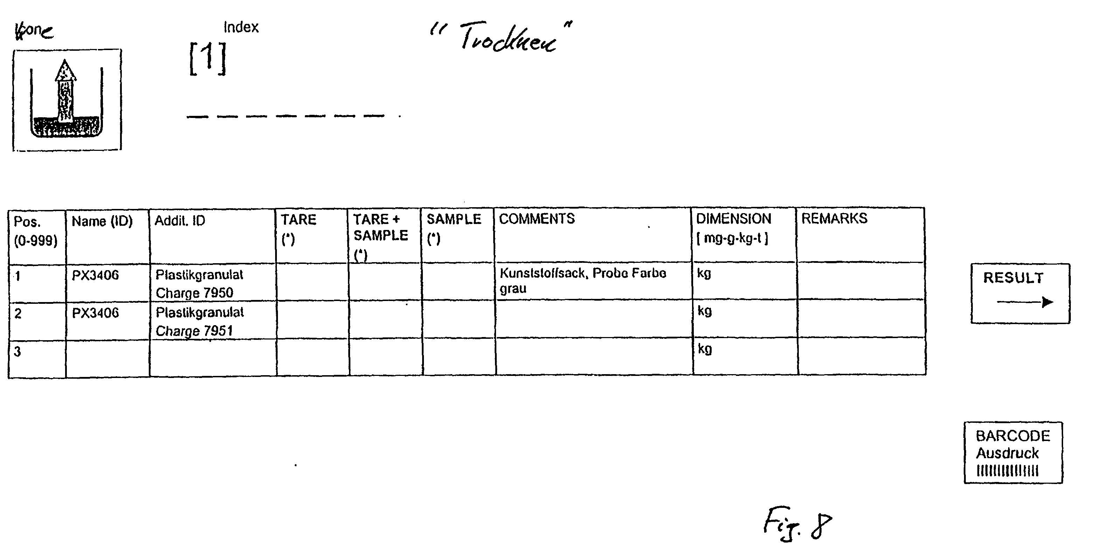

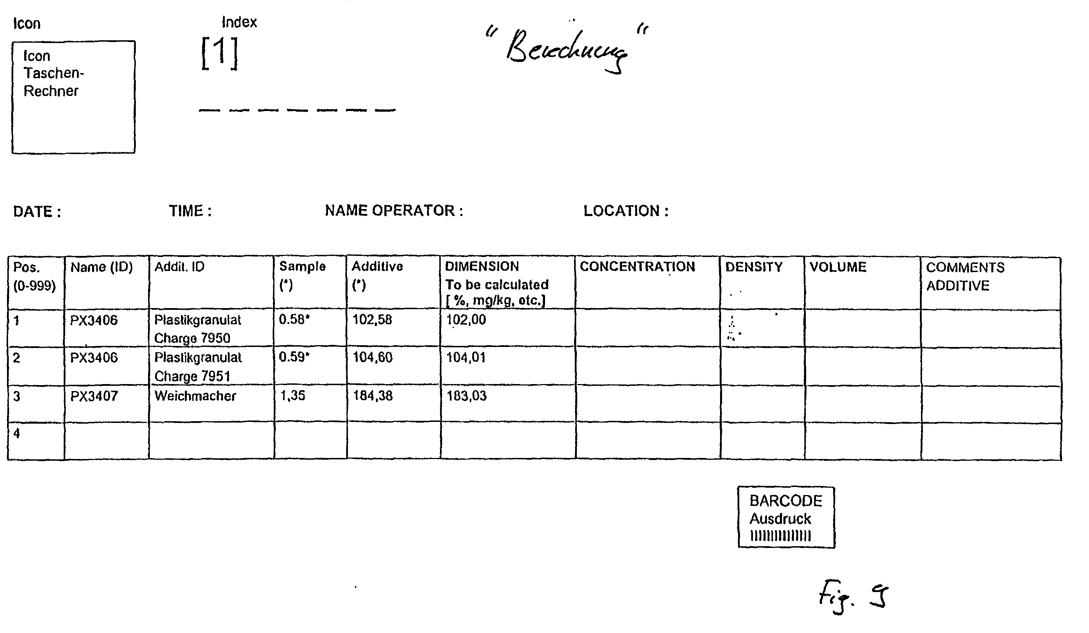

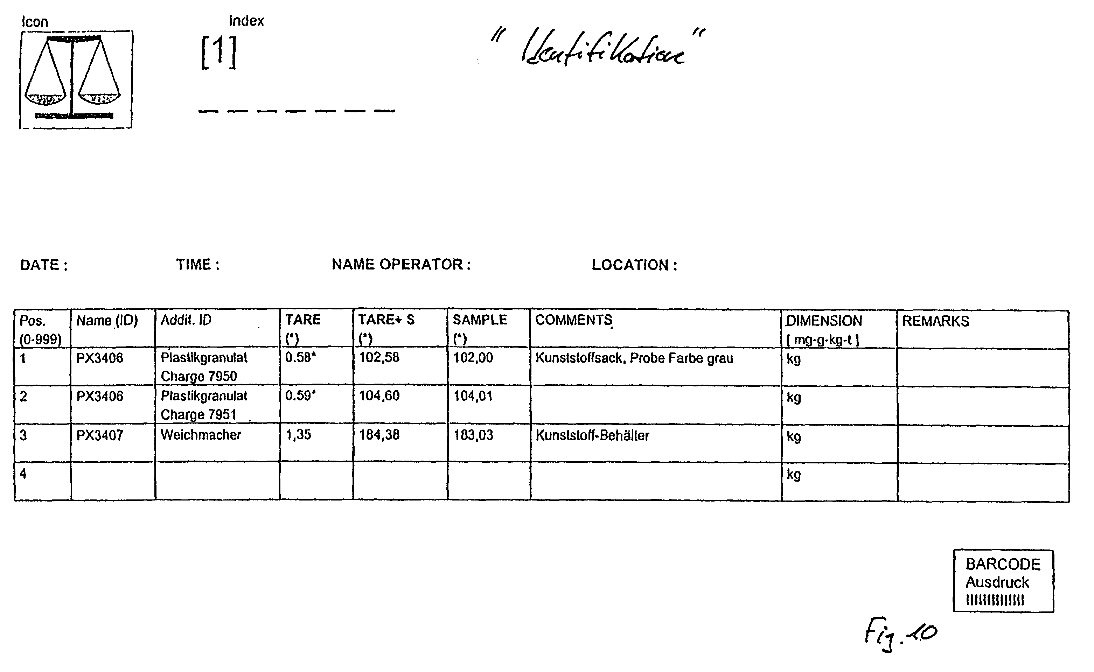

Figur 2 zeigt einen als Baum strukturierten Ablauf einer Probenpräparation. Der Baum 13 ist in Module 14 unterteilt, die die jeweiligen Probenpräparationsmethoden wiedergeben. Wie in Figuren 3 bis 10 gezeigt ist, können sämtliche Probenpräparationsmethoden, die als Module 14 der Baumstruktur 13 vorliegen, auch durch eine symbolische Darstellung, nämlich sogenannten Ikonen, wiedergegeben werden.

Bei einer typischen Probenpräparation werden zuerst die im Zuge der Probenpräparation durchzuführenden Methoden festgelegt, indem sie gemäß der Baumstruktur 13 von Figur 2 in beispielsweise die Arbeitsstation 3 eingegeben werden. Die einzelnen Methoden werden dabei modular zu der Baumstruktur aneinander gefügt, bis der gesamte zu durchlaufende Probenpreparationsablauf erstellt ist. Die Module können dabei am Rand des Bildschirms graphisch oder durch ihre Bzeichnung gekennzeichnet angeordnet sein, wobei die Zusammenstellung zu der Baumstruktur mittels einer "Drad-andDrop"-Technik erfolgen kann.

Wenn nunmehr diese Probenpräparation ausgeführt werden soll, erscheint die Baumstruktur gemäß Figur 2, gegebenenfalls auch rein grafisch durch die Ikonen wiedergegeben, auf dem Monitor 10 der Arbeitsstation 3. Alternativ oder zusätzlich kann diese Baumstruktur gegebenenfalls als Ikonen auch auf dem Bildschirm 11 einer Waage 1 angezeigt werden. Die Probenpräparation hat nunmehr gemäß der in der Baumstruktur 13 vorgegebenen Schritte zu erfolgen. Vor, während und/oder nach jedem Probenpräparationsschritt, der in der Baumstruktur 13 angegeben wird, erfolgt ein Wiegevorgang an einer Waage 1.

Die Wägedaten gemäß dem aktuellen Wiegevorgang können somit methodenspezifisch und insbesondere zugeordnet zu der aktuellen Probenpräparationsmethode beispielsweise in dem Datenbank-Server 6 abgespeichert werden. Mit anderen Worten, die Wägedaten werden nicht nur in einer Datenbank abgespeichert, vielmehr erfolgt die Abspeicherung in dem Kontext mit den aktuellen und gegebenenfalls auch vorhergehenden Probenpräparationsmethoden. Diese methodenspezifische Abspeicherung ermöglicht es, der Recheneinheit wie beispielsweise dem PC 3, weitere physikalische Größen aus dem Wägedaten abzuleiten.

Auf dem Bildschirm 11 einer Waage 1 erkennt der Benutzer dabei den aktuellen Zustand des Probenpräparationsablaufs, d.h. bei welcher Probenpräparationsmethode der Baumstruktur 13 sich der Ablauf gerade befindet. Somit ist der Benutzer an der Waage 1 selbst instruiert, welche Handlungen auszuführen sind. Darüber hinaus werden die Wägedaten sozusagen nicht blind in de Datenbank-Server 6 abgespeichert, vielmehr kann der Benutzer an dem Bildschirm 11 erkennen, ob die aktuellen Wägedaten korrekt zugeordnet abgespeichert werden. Die Bedientasten 12, die wie gesagt auch als Touchscreen-Felder ausgeführt sein können, können es dem Benutzer darüber hinaus ermöglichen, die Zuordnung der Abspeicherung der Wägedaten zu verändern, bzw. zu scrollen und gegebenenfalls auch den gesamten Probenpräparationsablauf durchzublättern (scrollen).

An der Waage selbst kann wie gesagt der Benutzer feststellen, in welcher Spalte sich gerade die Eingabe des Probenpräparationsablaufs befindet und darüber hinaus ist eine Positionierung innerhalb des Probenpräparationsablaufs an der Waage selbst möglich.

Dank des Bildschirms 11 und den Steuertasten (Bedientasten) 12 entfallen also unnötige Wege zwischen der Waage 1 als zentralem Element der Probenpräparation und dem PC 3, der durchaus abgelegen installiert sein kann.

Im Sinne einer Qualitätskontrolle kann beispielsweise das Taragewicht des Probenbehälter 8, in dem eine spezielle Probe 2 vorliegt, zur Identifizierung der Probe verwendet werden, da bei genauer Messung üblicherweise kein Probenbehälter das gleiche Gewicht wie ein weiterer Probenbehälter aufweist.

Durch die Protokollierung des gesamten Ablaufs kann die Qualitätskontrolle und Qualitätssicherung weiter verbessert werden, da ein "Mogeln" bei einem Wägevorgang dadurch nahezu unmöglich wird, daß ein solches "Mogeln" Konsequenzen für die gesamte weitere Verarbeitung in dem Probenpräparationsablauf hätte und somit sofort zu Widersprüchen bei folgenden Berechnungen führen würde. Weiterhin kann durch diese Dokumentation und Protokollierung nachvollzogen werden, welcher Benutzer welchen Probenpräparationsschritt (Probenpräparationsmethode) ausgeführt hat. Eine derartige Protokollierung und Dokumentation ist für eine Qualitäts-Zertifizierung eines Labors unumgänglich.

Das Gewicht der Probenpräparationsbehälter 8 kann als Tara-Messung genau erfaßt werden und beispielsweise als Strichcode zur Identifizierung verwendet werden. Auch des verringert das Risiko, daß die Qualität der Analyse- und Prbenpräparation beispielsweise durch Vertauschen von Proben verschlechtert wird.

Eine weitere Steigerung der Qualität erfolgt durch die Erfindung auch dadurch, daß der Ablauf der Probenpräparation dem Benutzer grafisch vorgegeben ist, so daß er sämtliche auszuführenden Handhabungen vorgegeben hat.

Neben real gemessen, d.h. im Zuge eines Wägevorgangs an einer Waage 1 entstandenen Wägedaten, kann auch der Fall auftreten, daß an bestimmten geschätzte Wägedaten eingegeben werden müssen. Diese werden auf dem Monitor 3 bzw. dem Bildschirm 11 der Waage 1 grafisch abgesetzt von real gemessenen Wägedaten wiedergegeben. Beispielsweise können geschätzte (angenommene) Wägedaten kursiv wiedergegeben werden. Sobald im Zuge des Ablaufs der Probenpräparation an einer Stelle die geschätzten Werte durch tatsächlich ermittelte Wägedaten ersetzt werden können, pflanzt sich diese Ersetzung der geschätzten Werte durch real gemessene auch rückwärts fort, d.h. auch Wägedaten und/oder daraus abgeleitete Größen aus vorhergehenden Probenpräparationsmethoden werden entsprechend automatisch korrigiert.

Real ermittelte Wägedaten können beispielsweise durch Drücken einer Print-Taste an der Waage 1 von der Waage an die Software und somit an die Recheneinheit übergeben werden. Sind die Daten dagegen abgeschätzte Werte, die mit einer Tastatur beispielsweise einer Waage 1 eingegeben werden, werden diese von der Software automatisch separat zu real ermittelten Wägedaten weiterverwertet und grafisch unterschiedlich dargestellt.

Neben standardisierten Probenpräparationsmethoden können natürlich auch individuelle zugelassen werden. Dennoch sollte im Sinne einer Standardisierung versucht werden, den Probenpräparationsablauf durch häufig auftretende Labormethoden aufzubauen. Typischerweise sind diese:
- Lösen,
- Filtration,
- Trennung/Sieben,
- Trocknung/Veraschung/Glührückstand,
- Verdampfen/Einengen/Aufkonzentrieren,
- Homogenisieren/Mixen/Mischen/Mahlen,
- Extraktion flüssig-flüssig bzw. fest-flüssig,
- Zentrifugieren,
- Aufschluß/Hydrolyse,
- PH-Einstellung, etc.

## Patentansprüche

1. Verfahren zur automatisierten Erfassung von Daten für die Präparation von Laborproben (2), wobei die Erfassung auf der Basis von Wägedaten von einer Waage (1) erfolgt, die mit einer Recheneinheit (3, 4) verbunden ist und/oder selbst eine Recheneinheit (9) aufweist,
**dadurch gekennzeichnet,**
**daß** aus den Wägedaten unter Berücksichtigung der aktuellen und/oder vorhergehender Präparationsmethoden automatisch wenigstens eine weitere bei einer Probenpräparation typische Größe abgeleitet wird.

2. Verfahren zur automatisierten Erfassung von Daten für die Präparation von Laborproben (2), wobei die Erfassung auf der Basis von Wägedaten von einer Waage (1) erfolgt, die mit einer Recheneinheit (3, 4) verbunden ist und/oder selbst eine Recheneinheit (9) aufweist,
wobei das Verfahren durch die folgenden Schritte gekennzeichnet ist:
- Eingabe eines Ablaufs (13), der die zur Präparation auszuführenden Präparationsmethoden als Module (14) wiedergibt, in die Recheneinheit (3, 4, 9),
- automatische Abspeicherung der Wägedaten, die sich im Zuge der Durchführung der Präparationsmethoden ergeben, wobei die Abspeicherung jeweils unter Zuordnung zu der entsprechenden Präparationsmethode erfolgt.

3. Verfahren nach Anspruch 2,
**dadurch gekennzeichnet,**
**daß** weitere für eine Präparation typische Größen automatisch aus den Wägedaten abgeleitet werden.

4. Verfahren nach einem der Ansprüche 2 oder 3,
**dadurch gekennzeichnet,**
**daß** die Module (14) als Ikonen graphisch auf einer Anzeige wiedergegeben werden.

5. Verfahren nach einem der vorhergehenden Ansprüche,
**dadurch gekennzeichnet,**
**daß** das erfaßte Gewicht der Probenbehälter (8), in denen die Proben (2) vorliegen, zur Identifizierung der Proben (2) verwendet wird.

6. Verfahren nach einem der vorhergehenden Ansprüche,
**dadurch gekennzeichnet,**
**daß** der Ablauf der Probenpräparation in einer Baumstruktur (13) vorliegt.

7. Verfahren nach einem der vorhergehenden Ansprüche,
**dadurch gekennzeichnet,**
**daß** alternativ oder zusätzlich zu real gemessenen Wägedaten geschätzte Wägedaten eingegeben werden können, die jeweils unter Zuordnung zu der entsprechenden Präparationsmethode gespeichert werden.

8. Verfahren nach Anspruch 7,
**dadurch gekennzeichnet,**
**daß** geschätzte und reale Wägedaten graphisch jeweils unterschiedlich angezeigt werden können.

9. Verfahren nach einem der vorhergehenden Ansprüche,
**dadurch gekennzeichnet,**
**daß** an der Waage (1) selbst angezeigt wird, in welchem Zustand sich der Ablauf gerade befindet.

10. Verfahren nach einem der vorhergehenden Ansprüche,
**dadurch gekennzeichnet,**
**daß** die Wägedaten für eine Qualitätskontrolle ausgewertet werden.

11. Verfahren nach einem der vorhergehenden Ansprüche,
**dadurch gekennzeichnet,**
**daß** zur Ableitung volumetrischer Größen aus den Wägedaten die Dichten der verwendeten Proben- und Präparationsmaterialien eingegeben wird.

12. Software-Produkt,
**dadurch gekennzeichnet,**
**daß** es, wenn es in den Speicher einer Recheneinheit (3, 4) geladen ist, ein Verfahren nach einem der vorhergehenden Ansprüche implementiert.

13. System zur automatisierten Erfassung von Daten für die Präparation von Laborproben (2), aufweisend wenigstens eine Waage (1), die mit einer Recheneinheit (3, 4) verbunden ist und/oder selbst eine Recheneinheit (9) aufweist,
wobei die Wägedaten zu der Recheneinheit (3, 4, 9) übertragen werden und die Recheneinheit (3, 4, 9) aus den Wägedaten unter Berücksichtigung der aktuellen und/oder vorhergehender Präparationsmethoden wenigstens eine weitere bei einer Probenpräparation typische Größe ableitet.

14. System zur automatisierten Erfassung von Daten für die Präparation von Laborproben (2), aufweisend wenigstens eine Waage (1), die mit einer Recheneinheit (3, 4) verbunden ist und/oder selbst eine Recheneinheit (9) aufweist, wobei
- in die Recheneinheit (3, 4, 9) ein Ablauf (13) implementiert ist, der die zur Präparation auszuführenden Präparationsmethoden als Module (14) wiedergibt und
- die Recheneinheit (3, 4, 9) automatisch die Wägedaten, die sich im Zuge der Durchführung der Präparationsmethoden ergeben jeweils unter Zuordnung zu der entsprechenden Präparationsmethode speichert.

15. System nach Anspruch 14,
**dadurch gekennzeichnet,**
**daß** die Recheneinheit (3, 4, 9) weitere für eine Präparation typische Größen automatisch aus den Wägedaten ableitet.

16. System nach einem der Ansprüche 14 oder 15,
**dadurch gekennzeichnet**,
durch eine Anzeigeeinheit (10, 11) an der Waage (1) und/oder an einer separaten Recheneinheit (3, 4).

17. System nach einem der Ansprüche 13 bis 16,
**dadurch gekennzeichnet,**
**daß** die Recheneinheit (3, 4, 9) das erfaßte Gewicht der Probenbehälter (8), in denen die Proben (2) vorliegen, zur Identifizierung der Proben (2) verwendet.

18. System nach einem der Ansprüche 13 bis 17,
**dadurch gekennzeichnet,**
**daß** der Ablauf der Probenpräparation in einer Baumstruktur (13) vorliegt.

19. System einem der Ansprüche 13 bis 18,
**dadurch gekennzeichnet,**
**daß** die Recheneinheit (3, 4, 9) alternativ oder zusätzlich zu real gemessenen Wägedaten geschätzte Wägedaten verwendet, die jeweils unter Zuordnung zu der entsprechenden Präparationsmethode gespeichert werden.

20. System nach Anspruch 19,
**dadurch gekennzeichnet,**
**daß** eine Anzeigeeinheit (10, 11) an der Waage (1) und/oder der separaten Recheneinheit (3, 4) vorgesehen ist, die geschätzte und reale Wägedaten graphisch jeweils unterschiedlich anzeigt.

21. System nach einem der Ansprüche 13 bis 20,
**dadurch gekennzeichnet,**
**daß** die Waage (1) eine Anzeigeeinheit (11) zur Wiedergabe des aktuellen Zustands des Ablaufs aufweist.

22. System nach einem der Ansprüche 13 bis 21,
**dadurch gekennzeichnet,**
**daß** die Recheneinheit (3, 4, 9) die Wägedaten für eine Qualitätskontrolle ausgewertet.

23. System nach einem der Ansprüche 13 bis 22,
**dadurch gekennzeichnet,**
**daß** in der Recheneneinheit (3, 4, 9) und/oder der Waage (1) zur Ableitung volumetrischer Größen aus den Wägedaten die Dichten der verwendeten Proben- und Präparationsmaterialien abgespeichert sind.

## Claims

1. Method for automated acquisition of data for the preparation of laboratory samples (2), where the acquisition is done based on weighing data from a balance (1), that is connected to a computer unit (3, 4) and/or itself has a computer unit (9),
**characterized by** the fact
that, with consideration of the actual and/or previous preparation methods, at least one other quantity that is typical of a sample preparation is automatically derived from the weighting data.

2. Method for automated acquisition of data for the preparation of laboratory sample (2),
where the acquisition is done based on weighing data from a balance (1), that is connected to a computer unit (3, 4) and/or itself has a computer unit (9),
where the method is **characterized by** the followings steps:
- input of a sequence (13) that reproduces the preparation methods to be carried out for the preparation as a module (14), in the computer unit (3, 4, 9),
- automatic storage of the weighing data obtained in the course of carrying out the preparation methods, where the storage is always done coordinated with the corresponding preparation method.

3. Method according to Claim 2,
**characterized by** the fact
that further quantities typical for a preparation are derived automatically from the weighing data.

4. Method according to one of Claims 2 or 3,
**characterized by** the fact
that the module (14) is reproduced on a display graphically as icons.

5. Method according to one of the previous Claims,
**characterized by** the fact
that the detected weight of the sample container (8), in which the samples (2) are present, is used for identification of the samples (2).

6. Method according to one of the previous Claims,
**characterized by** the fact
that the sequence of sample preparation is present in a tree structure (13).

7. Method according to one of the previous Claims,
**characterized by** the fact
that alternatively or in addition to the real measured weighing data, estimated weighing data can be entered, which are always stored coordinated with the corresponding preparation method.

8. Method according to Claim 7,
**characterized by** the fact
that estimated and real weighing data can always be displayed in a different graphic form.

9. Method according to one of the previous Claims,
**characterized by** the fact
that the state in which the sequence is at a given time is displayed on the balance (1) itself.

10. Method according to one of the previous Claims,
**characterized by** the fact
that the weighing data are evaluated for quality control.

11. Method according to one of the previous Claims,
**characterized by** the fact
that the densities of the samples and preparation materials are entered in order to derive volumetric quantities from the weighing data.

12. Software product,
**characterized by** the fact
that when it is loaded into the memory of a computer unit (3, 4), it implements a method according to one of the previous Claims.

13. System for automated acquisition of data for the preparation of laboratory samples (2), having at least one balance (1) that is connected to a computer unit (3, 4) and/or itself has a computer unit (9), where the weighing data are transferred to the computer unit (3, 4, 9) and the computer unit (3, 4, 9) derives from the weighing data at least one other typical quantity of the sample preparation with consideration of the actual and/or previous preparation methods.

14. System for automated acquisition of data for the preparation of laboratory samples (2), having at least one balance (1) that is connected to a computer unit (3, 4) and/or has a computer unit (9) itself, where
- sequence (13) is implemented in the computer unit (3, 4, 9), reflecting the preparation methods to be carried out as module (14) and
- the computer unit (3, 4, 9) stores automatically the weighing data obtained in the course of carrying out the preparation methods, always coordinated with the corresponding preparation method.

15. System according to Claim 14,
**characterized by** the fact
that the computer unit (3, 4, 9) derives from the weighing data, automatically, other quantities that are typical of a preparation.

16. System according to Claims 14 or 15,
**characterized by**
a display unit (10, 11) on the balance (1) and/or on a separate computer unit (3, 4).

17. System according to one of Claims 13 to 16,
**characterized by** the fact
that the computer unit (3, 4, 9) uses the detected weight of the sample containers (8), in which the samples (2) are present for identification of the samples (2).

18. System according to one of Claims 13 to 17,
**characterized by** the fact
that the sequence of sample preparation is present in a tree structure (13).

19. System [according to] one of Claims 13 to 18,
**characterized by** the fact
that the computer unit (3, 4, 9) uses alternatively or in addition to real weighing data, measured weighing data that are always stored coordinated with the corresponding preparation method.

20. System according to Claim 19,
**characterized by** the fact
that a display unit (10, 11) is provided on the balance (1) and/or on the separate computer unit (3, 4), which always shows the estimated and real weighing data in a different graphic form.

21. System according to one of Claims 13 to 20,
**characterized by** the fact
that the balance (1) has a display unit (11) for showing the actual status of the sequence.

22. System according to one of Claims 13 to 21,
**characterized by** the fact
that the computer unit (3, 4, 9) evaluates the weighing data for quality control.

23. System according to one of Claims 13 to 22,
**characterized by** the fact
that in the computer unit (3, 4, 9) and/or in the balance (1), the densities of the samples and preparation materials used are stored in order to derive volumetric quantities from the weighing data.

## Revendications

1. Procédé d'acquisition automatique de données pour la préparation d'échantillons de laboratoire (2), dans lequel l'acquisition est réalisée sur la base de données de pesage d'une balance (1), qui est connectée à une unité de traitement (3, 4) et/ou qui comporte elle-même une unité de traitement (9),
**caractérisé en ce qu'**au moins une autre grandeur, typique pour une préparation d'échantillon, est dérivée automatiquement des données de pesage en tenant compte des méthodes de préparation actuelles et/ou précédentes.

2. Procédé d'acquisition automatique de données pour la préparation d'échantillons de laboratoire (2), dans lequel l'acquisition est réalisée sur la base de données de pesage d'une balance (1), qui est connectée à une unité de traitement (3, 4) et/ou qui comporte elle-même une unité de traitement (9), procédé **caractérisé en ce qu'**il comporte les étapes suivantes :
- saisie, dans l'unité de traitement (3, 4, 9) d'un organigramme (13) qui reproduit, sous forme de modules (14), les méthodes de préparation de la préparation,
- mise en mémoire automatique des données de pesage qui sont produites au cours du déroulement des méthodes de préparation, la mise en mémoire étant réalisée respectivement en correspondance avec la méthode de préparation correspondante.

3. Procédé selon la revendication 2, **caractérisé en ce que** d'autres grandeurs, typiques pour une préparation, sont dérivées automatiquement des données de pesage.

4. Procédé selon l'une des revendications 2 et 3, **caractérisé en ce que** les modules (14) sont reproduits graphiquement sous forme d'icônes sur un afficheur.

5. Procédé selon l'une des revendications précédentes, **caractérisé en ce que** le poids saisi du conteneur d'échantillons (8), dans lequel sont disposés les échantillons (2), est utilisé pour l'identification des échantillons (2).

6. Procédé selon l'une des revendications précédentes, **caractérisé en ce que** l'organigramme de la préparation d'échantillon est présenté sous forme d'une arborescence (13).

7. Procédé selon l'une des revendications précédentes, **caractérisé en ce que** des données de pesage estimées, qui sont respectivement mises en mémoire en correspondance avec la méthode de préparation correspondante, peuvent être entrées alternativement ou additionnellement aux données de pesée réellement mesurées.

8. Procédé selon la revendication 7, **caractérisé en ce que** des données de pesage estimées et réelles peuvent être affichées graphiquement de manière différente.

9. Procédé selon l'une des revendications précédentes, **caractérisé en ce qu'**il est affiché à la balance (1) elle-même à quelle étape se trouve précisément le déroulement de l'organigramme.

10. Procédé selon l'une des revendications précédentes, **caractérisé en ce que** les données de pesage sont exploitées pour un contrôle de qualité.

11. Procédé selon l'une des revendications précédentes, **caractérisé en ce que** les densités des matériaux de préparation et d'échantillon utilisés sont entrées pour la dérivation de grandeurs volumétriques à partir des données de pesage.

12. Produit logiciel, **caractérisé en ce qu'**il met en oeuvre un procédé selon l'une des revendications précédentes lorsqu'il est chargé dans la mémoire d'une unité de traitement (3, 4).

13. Système pour l'acquisition automatique de données pour la préparation d'échantillons de laboratoire (2), comportant au moins une balance (1), qui est connectée à une unité de traitement (3, 4) et/ou qui comporte elle-même une unité de traitement (9),
dans lequel les données de pesage sont transmises à l'unité de traitement (3, 4, 9) et l'unité de traitement (3, 4, 9) dérive des données de pesage au moins une autre grandeur, typique pour une préparation d'échantillon, en tenant compte des méthodes de préparation actuelles et/ou précédentes.

14. Système pour l'acquisition automatique de données pour la préparation d'échantillons de laboratoire (2), comportant au moins une balance (1), qui est connectée à une unité de traitement (3, 4) et/ou qui comporte elle-même une unité de traitement (9), dans lequel
- un organigramme (13), qui reproduit, sous forme de modules(14), les méthodes de préparation de la préparation, est exécuté dans l'unité de traitement (3, 4,9),
- l'unité de traitement (3, 4, 9) met automatiquement en mémoire les données de pesage qui sont produites au cours du déroulement des méthodes de préparation, la mise en mémoire étant réalisée respectivement en correspondance avec la méthode de préparation correspondante.

15. Système selon la revendication 14, **caractérisé en ce que** l'unité de traitement (3, 4, 9) dérive automatiquement des données de pesage d'autres grandeurs, typiques pour une préparation.

16. Système selon l'une des revendications 14 et 15, **caractérisé par** une unité d'affichage (10, 11) sur la balance (1) et/ou une unité de traitement séparée (3, 4).

17. Système selon l'une des revendications 13 à 16, **caractérisé en ce que** l'unité de traitement (3, 4, 9) utilise le poids saisi du conteneur d'échantillons (8), dans lequel sont disposés les échantillons (2), pour l'identification des échantillons.

18. Système selon l'une des revendications 13 à 17, **caractérisé en ce que** l'organigramme de la préparation d'échantillon est présenté sous forme d'une arborescence (13).

19. Système selon l'une des revendications 13 à 18, **caractérisé en ce que** l'unité de traitement (3, 4, 9) utilise, alternativement ou additionnellement aux données de pesée réellement mesurées, des données de pesage estimées, qui sont, respectivement mises en mémoire en correspondance avec la méthode de préparation correspondante.

20. Système selon la revendication 19, **caractérisé en ce qu'**il comporte une unité d'affichage (10, 11) sur la balance (1) et/ou une unité de traitement séparée (3, 4), qui affiche graphiquement de manière différente des données de pesage estimées et réelles.

21. Système selon l'une des revendications 13 à 20, **caractérisé en ce que** la balance (1) comporte une unité d'affichage (11) pour la reproduction de l'étape actuelle du déroulement de l'organigramme.

22. Système selon l'une des revendications 13 à 21, **caractérisé en ce que** l'unité de traitement (3, 4, 9) exploite les données de pesage pour un contrôle de qualité.

23. Système selon l'une des revendications 13 à 22, **caractérisé en ce que** les densités des matériaux de préparation et d'échantillon utilisés sont mises en mémoire dans l'unité de traitement (3, 4, 9) et/ou dans la balance (1) pour la dérivation de grandeurs volumétriques à partir des données de pesage.
